(19) Europäisches Patentamt
European Patent Office
Office européen des brevets

(11) **EP 1 829 906 A1**

(12) **EUROPEAN PATENT APPLICATION**

(43) Date of publication:
**05.09.2007 Bulletin 2007/36**

(51) Int Cl.:
*C08F 236/10* [(2006.01)] *C08F 4/48* [(2006.01)]

(21) Application number: **07003216.4**

(22) Date of filing: **15.02.2007**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **03.03.2006 IT MI20060385** | (71) Applicant: **Polimeri Europa S.p.A.**<br>**72100 Brindisi (IT)**<br><br>(72) Inventor: **Viola, Gian Tommaso**<br>**Ravenna (IT)**<br><br>(74) Representative: **Pfenning, Meinig & Partner GbR**<br>**Patent- und Rechtsanwälte**<br>**Theresienhöhe 13**<br>**80339 München (DE)** |

(54) **Continuous process for the preparation of random conjugated diene/vinyl arene copolymers**

(57) Continuous process carried out in the presence of at least two reactors in series, for the preparation of statistical vinyl arene/conjugated diene copolymers, the vinyl arene content ranging from 15 to 50% by weight, by means of the copolymerization under isothermal conditions in a hydrocarbon solvent, at a temperature ranging from 30 to 120°C, of vinyl arene/conjugated diene monomers, in the presence of at least one initiator and a 2-methoxy ethyl tetra-hydrofuran (THFA-ethyl) modifier.

**EP 1 829 906 A1**

Printed by Jouve, 75001 PARIS (FR)

**Description**

The present invention relates to a process in continuous for the preparation of random conjugated diene/ vinyl arene copolymers initiated by lithium alkyls in the presence of a selected modifier.

More specifically, the present invention relates to a process for the preparation in continuous of random styrene/ butadiene copolymers in the presence of 2-methoxy ethyl tetrahydrofuran.

The term "random styrene-butadiene copolymer" refers to styrene-butadiene copolymers in which the content of styrene in the form of blocks with respect to bound styrene is 10% or less, as measured by the oxidative decomposition method indicated by I.M. Kolthoff et al., J. Polymer Science, Vol. 1, page 429 (1946), or, more recently by Viola et al. (Sequence distribution of styrene-butadiene copolymers by ozonolysis, high performance liquid chromatographicand gas chromatographic-mass spectrometric techniques, J. Chromatography A, 117 (1994)).

In the following description, reference is made to styrene as typical vinyl arene and to butadiene as typical conjugated diene, without being limited to these compounds.

It is known that in copolymerization initiated by organo-lithium derivatives, in an inert solvent and in the absence of polar species, due to the preference of butadiene of homo-polymerizing, the styrene does not take part in the reaction until the almost complete exhaustion of the diene monomer; this behaviour causes the formation of a block copolymer of the p(butadiene)-co(polybutadienepolystyrene)-p(styrene) type rather than a copolymer in which the vinyl aromatic monomer is homogeneously distributed along the molecular chain; in this case, the copolymer is defined "statistical". The part of copolymer included between two blocks of polybutadiene and polystyrene consists of a section with a composition which is progressively rich in one of the two monomers, called "tapered joint", whose dimensions are generated by kinetic motives. The characteristics of this type of material are those typical of block copolymers rather than those of a statistical copolymer, which makes them unsuitable for use in the tyre industry.

It is also known that the presence in solution of particular aprotic polar substances called "modifiers" causes a modification in the microstructure of the polydiene homopolymer (or copolymer) when the polymerization, initiated by lithium alkyls, is carried out in a mixture of diene monomers and vinyl aromatic compounds. The term microstructure of the diene part indicates the different way in which the diene comonomer can be arranged in the macromolecule, i.e. in the form of 1,4-cis, 1,4-trans or 1,2; reference is made to this last structure hereunder, also defining it as a vinyl unit. In particular, in the case of the homopolymerization of butadiene, the use of modifiers causes an increase in the content of 1,2 units, whereas in the case of a statistical styrene-butadiene copolymer, in addition to the already mentioned increase in the 1,2 unit, the main effect is an improved distribution of the vinyl aromatic monomer along the molecular chain. Among the modifiers which can be used in the rubber industry, those consisting of ethers are preferred: modifiers of the amine type, which are well-known, have been abandoned due to environmental and toxicological problems. The optimum concentration of the "modifier" to obtain a statistical styrene-butadiene copolymer depends on various factors, among which above all its chemical structure, the reaction temperature and also the quantity of styrene which is reacted with the diene monomer. In general, modifiers progressively lose their capacity of statistically distributing along the molecular chain with an increase in temperature. With reference to the physico-chemical characteristics of modifiers belonging to the ether family, two different groups can be identified depending on the structure and behaviour with respect to the cation (typically $Li^+$). Those belonging to the first group exert a solvating action with respect to the active centre due to the single polarity of the molecule which, as it does not have at least two sites suitable for being bound to the cation, does not demonstrate a chelating action, whereas those belonging to the second group exert a chelating action with respect to the cation. As a result of this, whereas modifiers belonging to the first group must be used in a high molar ratio with respect to the lithium (the molar ratio ether : Li typically ranges from 100 to 1000), those belonging to the second group are used in a molar ratio ranging from 0.5 to 10. In all cases, the ratio is in relation to the polymerization temperature and also to the microstructure and desired composition. Among modifiers of the first group, the typical representative is THF, whereas among those belonging to the second group 2,2-bis(2-oxolanyl)propane (described in US-A-4,429,090 and US-A-4,429,091) and 2-methoxy ethyl tetrahydrofuran (THFA-et) can be mentioned as non-limiting examples.

In practice, the main difference between the two groups of modifiers indicated above specifically consists in the quantity necessary for obtaining the same vinyl-promoter and randomising effect. The difference in use of the two types of modifiers is due to the fact that when modifiers belonging to the first group (solvating) are used, the termination reactions of the active centre are accelerated as a result of the basic acid reactions between the latter and the ether, mainly due to the larger quantity of the latter. This has led the rubber industry to look for chelating modifiers which, when used in much lower quantities with respect to solvating agents, minimize the termination reactions of the active centres whose negative effect is explained hereunder.

A further advantage deriving from the use of chelating modifiers derives from the fact that their higher boiling point with respect to the solvent facilitates their separation from the solvent itself by distillation, thus allowing rapid production changes on the same production line.

US-A-4,367,325 describes the preparation of statistical styrene-butadiene copolymers, initiated with lithium alkyls and carried out in a hydrocarbon solvent, in the presence of Lewis bases, in particular ethers and amines. Among ethers, US-4,367,325 cites ethylene glycol dimethyl or diethyl or dibutyl ether, diethylene glycol dimethyl or diethyl or dibutyl ether, triethylene glycol dimethyl or diethyl ether, tetrahydrofuran, 2-methoxy ethyl tetrahydrofuran, 2-methoxy methyl tetrahydrofuran, 2,5-dimethoxy methyl tetrahydrofuran, dioxane. In addition to a statistical distribution of the vinyl aromatic comonomer in the polymeric chain, the use of the above modifiers also causes an increase in the vinyl content. The copolymers obtained from US-A-4,367,325 have a vinyl content of at least 70%, and a styrene content ranging from 3 to 30% by weight. The process preferred by US-A-4,367,325 is adiabatic in which the temperature of the reactor increases with respect to the initial temperature during the polymerization due to the latent reaction heat.

The use of modifiers has different consequences in relation to the type of reactors in which said modifiers are used.

The industry for the production of rubbers prepared in an inert solvent solution with the use of lithium alkyls mainly adopts two types of reactor configuration:

## 1) Batch-type or discontinuous reactors

According to this technique, the reactor is charged with monomers in the desired ratio, the solvent in a suitable quantity for obtaining a solution containing from 10 to 15% of copolymer, the modifier in a suitable ratio with lithium alkyl and the latter in a quantity necessary for obtaining the desired Molecular Weight. The initial temperature of the reaction is generally not less than 40°C. In this type of reactor, due to the reaction rate and consequent rapid increase in temperature, there is a thermal jump which cannot be eliminated either with the use of cooling jackets (low exchange surface) or with the use of cooling coils situated inside the polymeric solution (they would be rapidly fouled). The thermal jump which, in the case of a solution containing 12% of a mixture of monomers consisting of 75% of butadiene and 25% of styrene, can reach 70°C, causes a progressive loss in efficiency of the modifier with a consequent decrease in its capacity of homogeneously distributing the vinyl aromatic monomer along the molecular chain in addition to a progressive loss in efficiency of vinyl promotion (this term indicates the capacity of the modifier of generating the 1,2 unit). A copolymer synthesized in a batch reactor therefore has, due to the temperature variation typical of this type of reactor, an intrinsic heterogeneity of the composition (increase in the % of styrene polymerized with an increase in the conversion) and the microstructure of the butadiene part (decrease in the quantity of 1,2 unit with an increase in the butadiene conversion). The progressive loss in efficiency of the ether with the temperature, in addition to a compositional and micro structural heterogeneity along the molecular chain, therefore causes the formation of non-statistical sequences and styrene blocks. The term "blocks" indicating polystyrene sequences ($S_n$, with n>10), after demolition with ozone and HPLC-MS analysis, it is found that for styrene-butadiene copolymers synthesized in batch with a styrene content equal to 25%, $S_n$ ranges from 2 to 5% of the total styrene, whereas in the case of a styrene content equal to 40%, $S_n$ > 10%. Together with greater quantities of $S_n$ there are obviously proportionally greater quantities of non-statistical $S_m$ sequences (m<10), generally identified with the term "micro-blocks".

The theory envisages that for a polymerization defined "living" in the absence of termination and transfer reactions and with a polymerization initiating rate much greater than the kinetic chain propagation rate, such as the polymerization of monomers considered initiated by lithium alkyl effected in batch-type reactors, the molecular weight distribution has a dispersion index $M_w/M_n$ equal to 1. The presence of protogenic substances among which the modifier, due to the acidity of the protons present on the ether carbon atom, can cause the partial termination of the terminals in propagation; the entity of this phenomenon depends on the temperature and residence time of the polymer at a high temperature. In a batch-type reactor, however, this problem does not significantly modify the molecular weight distribution as these reactions become active when the conversion is complete (in kinetic terms the kinetic chain propagation rate is higher than that of its termination reaction).

## 2) Continuous reactors

In this type of reactor, the solvent, monomers, modifier and polymerization initiator are fed in continuous in the correct volumetric ratios. The main advantage of the use of this reactor configuration is that it facilitates the synthesis temperature control and effects polymerization under almost isotherm conditions or in any case with oscillations not higher than 5°C.

The temperature control can be effected by suitably regulating the temperature of the fluids at the inlet or by means of a suitable dimensioning of the cooling system of the reactors, or by using, as first reactor, a reactor of the "boiling" type in which the reaction heat is subtracted from the reaction environment by means of partial evaporation and recondensation of the polymerization solvent.

Polymerization in continuous therefore avoids the thermal jumps typical of batch reactors and consequently the compositional and micro structural heterogeneity previously mentioned as being typical of batch reactors.

Generally, for this type of reactor, if perfectly stirred, the residence time of the macromolecules in propagation can generally be described by means of a Poisson distribution curve.

In a polymerization effected batchwise, all the molecules reside for the same time in the reactor and consequently they are all equal in terms of molecular weight. In living polymerizations effected in continuous, on the contrary, the molecular weight distribution has the same residence time trend as the molecules in the reactors and, in the case of a living reaction and in the absence of transfer and termination reactions, it depends on the number of reactors and conversion reached in each reactor. In theory, in a reactor of the CSTR (Complete Stirred Tank Reactor) type, the $M_w/M_n$ ratio is equal to 2. This ratio becomes equal to 1.5 when the reaction is carried out in two CSTR reactors situated in series with a conversion equal to 50% in each reactor; the $M_w/M_n$ ratio progressively decreases with an increase in the number of reactors provided the conversion is equal for each reactor.

It should be remembered that the greater or lesser processability of elastomeric materials, i.e. the rate and efficiency with which the reinforcing fillers (in particular silica and carbon black), as well as the vulcanising agents, accelerating agents and other additives, are absorbed and subsequently dispersed inside the rubber matrix, depends on the visco-elastic characteristics of the material. The question has been studied by Tokita N. and Pliskin (1973, Rubber Chemistry and Technology: Vol. 46, page 1173), which identifies different structural technologies of macromolecules which behave differently when the preparation operation of the blend is effected. On the basis of these studies, it is possible to rationalize a behaviour known to the transformation industry whereby polymers with a molecular weight distribution with a dispersion index $M_w/M_n < 1.3$ (and therefore typical of batch polymerization) have considerable difficulty in incorporating the fillers, whereas polymers having a molecular weight dispersion with a dispersion index $M_w/M_n$ ranging from 1.8 to 2.5 have a good processability. This characteristic can be further improved by the introduction of branchings of the "long chain branching" type generated, for example, by reaction between the active terminal with alkyl bromides.

In all cases, the improvement of the workability characteristics and the attainment of an optimal behaviour when the rubber is mixed with various fillers, requires a polymer obtained by means of a continuous process (to have the right compromise between elastic and viscous properties, exemplified by the ratio $M_w/M_n$ centred on the value of 2) whose active chain ends must be as numerous as possible in order to maximise the efficiency of possible post-modification reactions, by means of which branchings can be introduced.

In normal practice, the highest conversion is reached in the first reactor (in which conversions of between 60 and 90% are normally obtained) whereas the subsequent reactors are necessary for completing the reaction, progressively slower due to the decrease in the concentration of the monomers. In all cases, also in the first reactor the macromolecules have a higher average residence time, and this happens when low polymer concentrations are present, with respect to the typical residence time of a batch reactor. It is therefore possible that the termination reactions characterized by lower rates with respect to the propagation rate, become relevant and determine together with the termination of a fraction of macromolecules, an increase in the $M_w/M_n$ ratio, which, in this case, would prove to be higher than that predicted by theory.

The running of polymerization reactions in reactors of the continuous type therefore allows a complete solution to the problem of the compositional and microstructural homogeneity, at the same time modifying the molecular weight distribution whose dispersion index $M_w/M_n$ increases and should reach, in the absence of side-reactions, values lower than or equal to two. The increase in the residence time of the propagating macromolecules, however, causes a higher influence of the importance of the termination reactions which, unlike batch reactors in which this type of reaction has no relevance on the molecular weight distribution as it is effective at complete conversion, causes an increase in the $M_w/M_n$ index which is higher than that calculated on the basis of the residence time distribution, typically having values ranging from 1.5 to 2.5.

The lower reactivity of modifiers with a propagation centre is therefore an important characteristic that they must have to prevent them from exerting, during polymerization, a terminating action with respect to the propagation centre with a consequent increase in the $M_w/M_n$ index and a consequent decrease in the number of propagation centres.

An excessive termination level can, in fact, cause a considerable slowing down of the polymerization kinetics and incomplete conversions. Furthermore, the increase in the dispersion index $M_w/M_n$ to values > 2.5 generally has a negative effect on the characteristics of the vulcanised product, with particular reference to a worse dispersion of the fillers, which causes a deterioration in the dynamic characteristics in the vulcanised product, with particular reference to the hysteresis characteristics.

It has been found that with the sole use of a particular chelating modifier, i.e. methoxy-ethyl tetrahydrofuran, all the above-mentioned requirements are satisfied.

In accordance with this, the present invention relates to a continuous process effected in the presence of at least two reactors in series, preferably of the CSTR (Complete Stirred Tank Reactor) type, for the preparation of statistical vinyl arene/conjugated diene copolymers, preferably styrene/butadiene, the vinyl arene content preferably ranging from 15 to 50% by weight, most preferably between 20 and 45%, by copolymerization under isothermal conditions in hydrocarbon solvent, at a temperature ranging preferably from 30 to 120°C, most preferably from 50 to 110°C, even more preferably from 80 to 110°C, of vinyl arene monomers /conjugated dienes, the above process being effected in the presence of at least one initiator selected from organo-lithium derivatives and a modifier, characterized in that the modifier is 2-methoxy ethyl tetrahydrofuran (THFA-ethyl).

The experimental part describes how 2-methoxy ethyl tetrahydrofuran is the ideal modifier, as in copolymerization reactions effected in continuous and at a temperature higher than 70°C, it allows a completely statistical distribution of the vinyl aromatic monomer to be obtained, and also does not interact with the propagating species. This particular behaviour of THFA-ethyl is quite surprising as its homologous products THFA-methyl, THFA-t-butyl and THFA-isopropyl do not have these properties contemporaneously and therefore do not satisfy the requirements mentioned above, in particular at high temperatures.

PROCESS DESCRIPTION

The term "under isothermal conditions" means that the temperature inside the reactors is maintained constant with a tolerance of $\pm$ 5°C.

As far as the organo-lithium derivatives used in the process of the present invention are concerned, these are well-known as anionic polymerization initiators of 1,3-dienes. They are compounds having the general formula $R(Li)_x$ wherein R represents a hydrocarbyl group containing preferably from 1 to 20 carbon atoms, most preferably from 2 to 8, and x is an integer from 1 to 4, i.e. the organo-lithium derivatives can be mono- or poly-functional. The above hydrocarbyl groups are preferably alkyl groups, primary, secondary and tertiary, even if primary and secondary groups are preferred. Examples of these alkyl groups are: methyl, ethyl, n-propyl, isopropyl, n-butyl, sec-butyl, t-butyl, n-amyl, sec-amyl, n-hexyl, n-heptyl, n-octyl, n-nonyl, n-dodecyl and octadecyl. Specific and preferred examples of lithium alkyls which can be used in the process of the present invention are: lithium -butyl, lithium n-propyl, lithium isobutyl, lithium t-butyl, lithium amyl. Mixtures of lithium alkyls can also be used. The preferred lithium alkyl is lithium n-butyl.

The amount of organo-lithium derivative which can be used in the process of the present invention changes according to the type of monomers to be polymerized and the molecular weight of the copolymer to be obtained.

As a general and preferred rule, however, from 1 to 100 mmoles of lithium alkyl are used per 1000 g of mix of monomers; in most cases, preferably 1 to 20 mmoles are used, the most preferred being within the range of 4 to 10 mmoles of lithium alkyls per 1000 g of monomer mix.

The mole ratio between the modifier of the present invention and the organo-lithium product obtained ranges preferably from 0.5 to 15, most preferably between 2 and 10.

As far as the vinyl arenes are concerned, typical examples are styrene, 1-vinyl-naphthalene, 2-vinyl naphthalene and relative alkyl derivatives. In the preferred embodiment, the vinyl arene is styrene.

The conjugated diene monomers which can preferably be used in the process of the present invention are 1,3 dienes, containing from 4 to 12 carbon atoms, preferably from 4 to 8 carbon atoms. Examples of these dienes are 1,3-butadiene, isoprene, 2,3-dimethyl-1,3-butadiene, 1,3 pentadiene (piperylene), 2-methyl-3-ethyl-1,3-butadiene, 1,3-octadiene. In the preferred embodiment, the conjugated diene monomers are selected from 1,3-butadiene and isoprene, preferably 1,3-butadiene. In the process of the present invention, the monomers are usually contained in the reaction medium in a preferred quantity of 5 to 20% by weight. Said reaction medium, obviously contains the organic solvent, the monomers, the organo-lithium initiator derivative and the modifier.

The solvent which can be used in the process of the present invention consists preferably of one or more hydrocarbons selected from those of the aliphatic and cycloaliphatic series and mixtures thereof. These solvents preferably contain from 4 to 10 carbon atoms per molecule and are liquid under the polymerization conditions. Representative examples of said solvents which can be used in the process of the present invention are pentane, cyclopentane, isooctane, cyclohexane, n-hexane, alone or in a mixture.

In the continuous polymerization system, object of the present invention, the mixture of diene and vinyl aromatic monomers in the hydrocarbon solvent, together with 2-methoxy ethyl tetrahydrofuran, is fed into the first of a series of n reactors (n $\geq$ 2) of the CSTR type maintained at the same temperature ranging preferably from 30 to 120°C within an oscillation of $\pm$ 5°C, residence time ranging preferably from 30 to 120 minutes, together with the suitable quantity of lithium alkyl as initiator. The configuration of the series of reactors (in particular temperatures and residence times) is optimized so as to guarantee the content of vinyl required in the final polymer, together with the production of a conversion higher than 97% at the outlet of the nth reactor.

Preferably the number (n) of reactors in series is 2 or 3.

At the outlet of the series of reactors, the polymeric solution is collected in pressurized containers, to which a mix consisting of antioxidants is added which, according to the known art, belong to the group of hindered phenols (primary antioxidant) together with a phosphite or organic phosphonite (secondary antioxidant) in a quantity of 0.05 to 0.5 parts of primary antioxidant per 100 g of rubber and 0.1 to 1 part of secondary antioxidant per 100 g of rubber, respectively. Non-limiting examples of a primary antioxidant is 4-[[4,6-bis(octylthio)- 1,3,5-triazine-2-yl]amino]-2,6-bis (1,1-methylethyl)phenol (CAS Nr. 991-84-4), Irganox® 565, and a non-limitiing example of a secondary antioxidant is tris(2,4-di-t-butylphenyl)phosphate (CAS nr. 31570-04-4) Irgafos 168® (Ciba).

After the addition of antioxidants to the polymeric solution, according to an embodiment, an extending oil can be added, belonging to the group of aromatic oils, or with a lower aromatic content, for example MES (Mild Extraction Solvate) or TDAE (Treated Distillate Aromatic Extract) oils, in which the amount of aromatic compounds is lower than 20%.

The extending oils are usually and preferably added in a quantity of 10 to 50 parts of oil per 100 parts of rubber, preferably from 20 to 40 parts of oil per 100 parts of rubber. After the addition of oil, the polymeric solution is sent to stirred containers containing boiling water heated by the continuous addition of water vapour. The solvent is eliminated in said containers and the resulting clots of damp rubber, after the separation from the water by passages on sieves, are sent for mechanical drying consisting of two mechanical extruders. Water is eliminated by squeezing in the first extruder (expeller) down to a content ranging from 3 to 12% by weight, whereas in the second extruder (expander) the water is eliminated by heating the mass up to temperatures of 160-180°C and it is eliminated in the form of vapour. The dried rubber is subsequently pressed into bales.

As far as the quantity of modifier of the present invention (i.e. THFA-ethyl) is concerned, this can vary according to the vinyl content of the copolymer to be obtained, the polymerization temperature and the amount of styrene which must be well-distributed in the macromolecule.

If statistical polymers are to be obtained, for example, having a vinyl content of 65% and a styrene content of 25% a synthesis is carried out at a temperature of 54-58°C in the presence of a quantity of THFA-ethyl such as to have a molar ratio THFA-ethyl/Li of between 5 and 6. In the case of a statistical polymer containing 25% $\pm$ 3 of styrene and 25% $\pm$ 3 of vinyl units, the synthesis temperature must be in the interval 90-95°C whereas the molar THFA-ethyl/Li must be between 2-3. If a styrene-butadiene statistical copolymer is to be prepared, containing 40% $\pm$ 3 of vinyl units and 40% $\pm$ 3 of styrene the reaction is effected at a temperature of 90-95°C and a molar ratio THFA-ethyl/Lithium ranging from 6.0 to 7.5.

The copolymers which can be obtained by means of the process of the present invention have a weight average molecular weight ($M_w$) ranging from 200,000 to 800,000 according to the quantity and type of oil extender used, as well as the Mooney viscosity desired for the finished product. For example, the addition of a quantity of aromatic oil extender equal to 37.5 parts of oil per 100 parts of rubber, requires a weight average molecular weight of the latter ranging from 400,000 to 700,000 to obtain an oil-extended rubber having a Mooney viscosity ranging from 40 to 70. The term "Mooney viscosity" refers to the polymer viscosity measured at 100°C with a large (L), pre-heated rotor, for 1 minute, and the measurement is effected for 4 minutes according to the method ASTM D 1646.

The polydispersity index $M_w/M_n$ of the copolymers of the present invention ranges from 1.6 to 2.5.

ADVANTAGES OF THE PROCESS

In short, the process of the present invention has several advantages with respect to those of the state of the art:

1) By varying the temperature, high-styrene copolymers (up to 50% by weight) and low-styrene copolymers (higher than 15% by weight) can be prepared, wherein the content of vinyl units can be low (lower than 30% with respect to the diene portion alone) or high (>60% with respect to the diene portion alone). Several types of statistical styrene-conjugated diene (SSBR) copolymers can consequently be produced in a single production line, by modifying the amount of initiator, the THFA-ethyl/Li ratio and the polymerization temperature, in addition to the quantity of vinyl aromatic comonomer.

2) Styrene-butadiene copolymers can be prepared containing amounts of styrene higher than 25%, avoiding the contemporaneous formation of 1,2 units.

3) Copolymers having a certain branching degree can be prepared, making the subsequent post-modification step (for example by reaction with alkyl bromides) unnecessary as also the coupling step with electrophilic substances (such as silicon tetrachloride, for example), generally necessary for improving the material processability and eliminating the so-called "cold flow" phenomenon (this term refers to the fact that the rubber bale can flow and become deformed, during storage, thus making the use of automatic systems for feeding the transformation lines) impossible. The term processability, as already specified, means the rate with which the filler consisting of silica or carbon black, together with the mix forming the vulcanising system, is englobed and subsequently dispersed in the material.

4) Copolymers at higher temperatures (>70°C) can be prepared, temperatures at which normal modifiers strongly interact with the active centres. The practical advantage is immediate as the increase in temperature causes a higher reaction rate, guaranteeing a complete conversion in that, as already specified, the termination phenomena are minimized.

5) Groups of copolymers can be prepared containing comparable weight quantities of styrene and butadiene in the 1,2 configuration, such as, for example, 25:25 and 40:40 compositions, operating at temperatures higher than 70°C. In this way, copolymers can be prepared which, even if they have the same glass transition temperature ($T_g$), they have different dynamo-mechanical characteristics.

Other advantages of the process of the present invention can be easily deduced from what is disclosed hereunder.

The copolymers of the present invention, having a good processability, are mainly used as bases for blends, possibly mixed with other elastomers, together with inorganic fillers (carbon black, silica or a mixture thereof), oil extenders, vulcanising agents, for the preparation of treads for car tyres.

As is known, the tyre industry uses styrene/butadiene statistical copolymers wherein the Tg is modulated mainly through a variation in the content of the vinyl unit. SSBRs are thus obtained in which the weight of styrene ranges from 20 to 35% and the butadiene unit of the 1,2 type ranges from 55 to 65%; in these polymers, the $T_g$ is normally around -20°C. In this way, elastomers are obtained which are suitable for the production of treads for car tyres, when low rolling resistance characteristics are required, without jeopardizing the road grip.

In applications in which an increase in the grip properties is required such as, typically, the construction of winter tyre treads or tyres for equipping high-performance vehicles, the quantity of styrene must be increased to prevent the $T_g$ of the copolymer from being greater than -20°C.

The increase in styrene and the necessity for its optimum distribution causes, in the tradition technique which uses temperatures lower than 70°C, the use of high quantities of chelating ether with a consequent increase in the $T_g$; as a result, by raising the quantity of styrene the Tg of the material is fatally increased to values of >-15°C. These styrene-butadiene copolymers with a Tg of >-15°C are not suitable for the construction of car tyre treads due to the fact that, whereas the grip characteristics are enhances, the abradability is also significantly increased.

The use of THFA-ethyl, on the other hand, allows the simple and repeatable preparation of polymers containing up to 50% by weight of styrene units, maintaining the 1,2 units at values lower than or equal to the quantity of styrene.

The importance of availing of a chelating ether capable of being used indifferently for the production of SSBR with a low and high vinyl unit and a low and high styrene content by simply modifying the reaction temperature together with the chelating ether/lithium ratio, allows various types of SSBR to be produced on a single line.

The following examples are provided for a better understanding of the present invention without limiting its scope.

## EXPERIMENTAL PART

CHARACTERIZATION OF SYNTHESIZED COPOLYMERS

### 1. Determination of bound styrene and the microstructure of polybutadiene

The method is based on the calculation of the ratios between the band intensities which can be attributed to styrene and the three Butadiene isomers (trans, vinyl and cis) ; the spectral areas used for the analytical determination, relating to the cis, trans and 1,2 isomers of butadiene and styrene prove to be: 1018 and 937 cm$^{-1}$ for the trans isomer, 934 and 887 cm$^{-1}$ for the 1,2 isomer (to be regulated due to the interference of the styrene), 800 and 640 cm$^{-1}$ for the cis isomer and between 715 and 680 cm$^{-1}$ for styrene. The measurement of the absorbances in the maximum points and a knowledge of the extinction coefficient values, measured on standard polymers characterized via $^1$H-NMR, allows the quantity of the various butadiene structures and the styrene quantity to be calculated, by means of the Lambert-Beer law.

### 2. Determination of the molecular mass distribution (MWD)

The determination of the molecular mass distribution is effected by means of gel elution chromatography (GPC) also known as exclusion chromatography effected by passing a solution in THF of the polymer object of the analysis onto a series of columns containing a solid phase consisting of cross-linked polystyrene with variably sized pores.

Instrumental configuration:

HP 1090 Chromatograph
Solvent THF
Temperature 25°C
$10^5$-$10^5$-$10^4$-$10^3$ PL-Gel columns
RI HP 1047 A detector

The determination of the molecular masses is effected according to the Universal Calibration method using the following values for K and $\alpha$, in relation to the quantity of styrene:

Styrene = 25%     k = 0.000389     $\alpha$ = 0.693
Styrene = 30%     k = 0.000368     $\alpha$ = 0.693
Styrene = 40%     k = 0.000338     $\alpha$ = 0.693

**3. Determination of the average molecular weight and measurement of the branching degree by means of the SEC/MALLS technique** according to an internal method borrowed from the work described in Application Note, n° 9, Wyatt Technology and Pavel Kratochvil, Classical Light Scattering from Polymer Solutions, Polymer Science Library, 5, Elsevier Science Publishers B.V. 1987. By coupling a multi-angular light diffusion detector (MALLS) with a traditional SEC/RI elution system, it is possible to contemporaneously effect the absolute measurement of the molecular weight and the gyration radius of the macromolecules which are separated from the chromatographic system. The quantity of diffused light from a macromolecular species in solution can in fact be used directly for obtaining its molecular weight, whereas the angular variation of the scattering is directly correlated to the average dimensions of the molecule in solution. The fundamental relation which is used is the following:

$$\frac{K^*c}{R_\theta} = \frac{1}{M_w\,P_\theta} + 2\,A_2\,c \quad (1)$$

wherein:

- $K^*$ = optical constant, which depends on the wave length of the light used, the dn/dc of the polymer, the solvent used
- $M_w$ = weight average molecular weight
- $c$ = concentration of the polymeric solution
- $R_\theta$ = diffused light intensity measured at an angle $\theta$
- $P_\theta$ = function which describes the diffused light angular variation
- $A_2$ = second virial coefficient of the solvent, equal to 1 for an angle $\theta$ equal to 0.

For very low concentrations (typical of a SEC system), 1 is reduced to

$$\frac{K^*c}{R_\theta} = \frac{1}{M_w\,P_\theta} \quad (2)$$

and effecting the measurement on various angles, the extrapolation at zero angle of the function $K^*c/R_\theta$ in relation to $sen^2\theta/2$ directly provides the molecular weight from the intercept value and gyration radius from the slope.
Furthermore, as this measurement is effected for every slice of the chromatogram, it is possible to obtain a distribution of both the molecular weight and also of the gyration radius.
The macromolecular dimensions in solution are directly correlated to their branching degree: with the same molecular weight, the smaller the dimensions of the macromolecule with respect to the corresponding linear macromolecule, the higher the branching degree; as a macromolecule having nodes in its interior (radial structures and branched structures) has, with the same molecular weight, a lower hydrodynamic volume with respect to a linear molecule, the slope of the line described above ($\alpha$ coefficient) will be greater or lesser depending on the lower or greater interconnection degree of the structures. In particular, for linear macromolecules, the proportionality coefficient between the gyration radius and molecular weight, proves to be equal to 0.58, whereas for branched molecules said value becomes progressively lower with an increase in the number of nodes present in the macromolecule. To provide an example, the statistical styrene-butadiene copolymer prepared by radicalic polymerization in emulsion (E-SBR) has an $\alpha$ value equal to 0.35-0.38.
Information relating to the macrostructure of a polymer is quantitatively deduced by evaluating the branching index $g_M$, which is defined for each macromolecule, as a ratio between the average quadratic <u>gyration</u> radius of the branched macromolecule and that of the linear macromolecule, with the same molecular weight:

$$g_{Mi} = \left[ \frac{<r^2>_b}{<r^2>_l} \right]_{Mi} \qquad (3)$$

The average branching index $g_M$ represents the average of this ratio in relation to the molecular mass distribution, and ranges from 0 to 1.

Instrumental configuration:

    RI HP 1047 A detector
    MALLS Wyatt Technology mod. DAWN-DSP
    KMX16-CROMATIX differential refractometer

### 4. Determination of the presence of sequences and polystyrene blocks

The method comprises a chemical degradation of styrene/butadiene copolymers by ozonolysis of the butadiene double bonds, followed by reduction and HPLC elution of the oligomers produced, in order to obtain a quantitative evaluation of the distribution of the styrene units in random and partially random SBRs. The possibility of having a double UV-MS detector allows the quantitative determination as % AREA from the UV plot and contemporaneously a control of the molecular weights of the species eluted, to be effected.

### 5. Determination of the Mooney viscosity

The determination of the Mooney viscosity was effected at 100°C with a rotor L and times (1+4)

Instrumental configuration:

    Monsanto MV2000E, viscometer, ASTM D1646.

### EXAMPLES

**Examples 1-20:** *Determination of the randomising capacity of THFA-Ethyl with respect to its homologous products and THF*

### Example 1

0.5 1 of anhydrous cyclohexane, 32 g of anhydrous and freshly distilled butadiene, together with 11 g of anhydrous styrene maintained on activated alumina for 24 hours for the complete elimination of the inhibitor, are added in order to a 1 liter reactor, equipped with a jacket for the circulation of a thermostat-regulated fluid, a coil for internal thermostatic regulation, coaxial with the stirrer, and a UV probe (1 mm optical path) connected through optical fibers to a UV/VIS spectrophotometer. The mixture, thermostat-regulated at 75°C, after the addition of 1.8 mmoles of THFA-methyl and subsequently 0.9 mmoles of Li-n butyl, was rapidly heated to a temperature of 80°C and thermostat-regulated at this temperature with a precision of $\pm$ 2°C. The absorbance measurement was effected during polymerization in the area between 290 and 350 nm, as indicated by Viola and co-workers in *Process Monitoring: UV Spectrophotometry as a practical tool* (Application of Anionic Polymerization Research, ACS Symposium Series 696, 1996, Editor R.P. Quirk).
Under the experimental conditions, the UV absorption of the propagating species proved to be the convolution of the absorption spectra of the butadienyl and stiryl species. The absorbance measured in the above-mentioned area, however, proved to be proportional to the concentration of the living species. The disappearance of the signal correlated to the presence of active species follows the kinetics of the pseudo-first order and it is therefore possible to obtain termination constants ($k_t$). The absorbance measurement was carried out for 120'.

The polymer formed at the end of the measurements was collected, coagulated, an antioxidant was added and subsequently analyzed after demolition obtained by ozonolysis.

The subsequent HPLC analysis provided the distribution of the styrene sequences and the relevant styrene block, when present (the term "block" defining, as already specified, the sum of the abundances relating to the sequences of Styrene $S_n$ with n > 20).

The results are shown in table 1.

**Example 2**

Under the same experimental conditions described in example 1, with the only difference of the reaction starting temperature which was 95°C and which was brought to 100°C and maintained at this temperature with an oscillation of $\pm$ 2°C.

The results are shown in table 1.

**Example 3**

Under the same experimental conditions described in example 1, the only difference being in the amount of THFA-methyl, which proved to be in a molar ratio of 6 with respect to Li.

The results are shown in table 1.

**Example 4**

Under the same experimental conditions described in example 3, the only difference being in the reaction starting temperature which was 95°C and which was brought to 100°C and maintained at this temperature with an oscillation of $\pm$ 2°C.

The results are shown in table 1.

**Examples 5-16**

An experimentation was carried out under the same conditions as examples 1-4, using THFA-ethyl ethers, isopropyl and t-butyl.

The results obtained in the examples are shown in table 1.

**Example 17**

Under the same conditions described in example 1, with the exception that 50 mmoles of THF are added instead of THFA-methyl, the polymerization being effected at 80 $\pm$ 2°C. The results are shown in table 1.

**Example 18**

Under the same conditions described in example 1, except that 50 mmoles of THF are added instead of THFA-methyl, the polymerization being effected at 100 $\pm$ 2°C.

The results are shown in table 1.

**Example 19-20**

Under the same conditions described in the examples 17 and 18, but using 100 mmoles of THF at temperatures of 80 $\pm$ 2°C and 100 $\pm$ 2°C.

The results are shown in table 1.

TABLE 1

| Example. | Ether | $T_{final}$ | THFA-R/Li | $k_t$ [min$^{-1}$] | 1,2 vinyl | Sn |
|---|---|---|---|---|---|---|
| 1 | THFA-methyl | 80$\pm$2 | 2 | 0.0049 | 31.5 | 1.1 |
| 2 | THFA-methyl | 100$\pm$2 | 2 | 0.0068 | 21.3 | 2.5 |

(continued)

| Example. | Ether | $T_{final}$ | THFA-R/Li | $k_t$ [min$^{-1}$] | 1,2 vinyl | Sn |
|---|---|---|---|---|---|---|
| 3 | THFA-methyl | 80±2 | 6 | 0.0053 | 50.9 | 0.2 |
| 4 | THFA-methyl | 100±2 | 6 | 0.0077 | 32.9 | 1.5 |
| 5 | THFA-ethyl | 80±2 | 2 | 0.0015 | 32.8 | 1.1 |
| 6 | THFA-ethyl | 100±2 | 2 | 0.0027 | 20.2 | 2.4 |
| 7 | THFA-ethyl | 80±2 | 6 | 0.0018 | 52.7 | 0.1 |
| 8 | THFA-ethyl | 100±2 | 6 | 0.003 | 31.4 | 1.9 |
| 9 | THFA-i-propyl | 80±2 | 2 | 0.0015 | 33.8 | 5.8 |
| 10 | THFA-i-propyl | 100±2 | 2 | 0.0027 | 23.3 | 13.9 |
| 11 | THFA-i-propyl | 80±2 | 6 | 0.0018 | 53.6 | 4.1 |
| 12 | THFA-i-propyl | 100±2 | 6 | 0.003 | 31.3 | 10.2 |
| 13 | THFA-t-butyl | 80±2 | 2 | 0.001 | 32.1 | 9.8 |
| 14 | THFA-t-butyl | 100±2 | 2 | 0.0021 | 18.9 | 17.9 |
| 15 | THFA-t-butyl | 80±2 | 6 | 0.0012 | 49.3 | 5.9 |
| 16 | THFA-t-butyl | 100±2 | 6 | 0.0024 | 27.8 | 13.7 |
| 17 | THF | 80±2 | 55 | 0.0095 | 33.4 | 0.9 |
| 18 | THF | 100±2 | 55 | 0.0105 | 23.5 | 2.6 |
| 19 | THF | 80±2 | 110 | 0.0115 | 47.7 | 0.3 |
| 20 | THF | 100±2 | 110 | 0.0155 | 35.3 | 1.8 |

Comments to Table 1

The data of table 1 show that the use of THF, in a molar ratio with respect to Lithium higher than 50, with temperatures higher than 70°C, causes an increase in the termination rate of the active centres, even if the styrene distribution is good, as revealed by the low values of $S_n$.

The use of ethers of the chelating type causes a sharp decrease in the constant value relating to the termination rate, showing a different behaviour. In particular, it is possible to classify the ethers examined, under the profile of the reaction rate with the active terminal. The result is that: THFA-t-but > THFA-i-prop = THFA-et >> THFA-met >> THF. The classification of the ethers examined under the profile of the greater capacity of randomly distributing the vinyl aromatic monomer, proves, on the other hand, to be: THFA-met = THFA-et = THF > THFA-i-prop >> THFA-t-but.

Therefore, THFA-et is particularly suitable for being used when the optimum distribution is required of a vinyl aromatic monomer at temperatures equal to or higher than 80°C, at the same time significantly reducing the incidence of the termination reactions.

**Comparative example 21 (LC1)** - Preparation in continuous of styrene-butadiene copolymers in the presence of THFA-methyl

The experiment is carried out on two reactors of the CSTR type in series, each having a volume of 100 liters, destined for copolymerization, followed by a third 50 l reactor to guarantee the almost complete conversion of monomers (>95.5%) and a mixer on line dedicated for the feeding of a possible branching agent. The residence time in the mixer is about half of that of a single reactor; both reactors are equipped with a wall-cleaning system, consisting of a wall-scraper integral with the shaft of the stirrer. The feeding of the ingredients in the reaction is effected by means of mass-type measurers. The mixture of reagents (cyclohexane, styrene, butadiene, vinyl-promoting agent consisting of THFA-methyl and anti-fouling agent) is prepared in a stirred reactor and under nitrogen pressure, in a quantity sufficient for guaranteeing a significant running, maintaining the composition of the reagent feeding constant with time. The initiator (lithium n-butyl in hexane) is fed at the inlet of the first reactor. The first polymerization reactor is of the boiling type; it is not run completely full, and part of the solvent is condensed and recycled to the reactor; the pressure regulation of the reactor consequently characterizes and regulates the temperature. All the ingredients are fed from the bottom of the reactor; the variation of the residence times is effected through a variation in the feeding flow-rates. A further control of the temperature is possible through the regulation of the temperature of the solvent and monomers at the inlet of the first reactor, using heat exchangers.

A copolymerization of butadiene and styrene was effected under the conditions described above, by feeding the solution, in hexane, of the monomers containing 9% by weight of butadiene and 3% by weight of styrene, together with an amount of THFA-methyl in order to maintain the ratio between lithium and the randomising agent within the range of 5.3-5.7. The total quantity of reagents and solvent was regulated so that the residence time in the first reactor proved to be 60 minutes. The quantity of lithium n-butyl fed proved to be equal to $0.028 \pm 0.003g$ for 100 g of the blend of monomers (hereinafter called *phm*: per hundred monomers) under the above conditions, at a temperature of $57 \pm 2°C$. A conversion was obtained in the first reactor equal to $75 \pm 5\%$, whereas in the second reactor the conversion was higher than 95%. Vapour was circulated in the jacket in a suitable quantity for keeping the temperature within the range of $57\pm2°C$, in order to maintain the desired temperature in the second reactor, whose reaction rate is lower with respect to the first reactor, due to the lower concentration of monomers. In the third reactor, also maintained at a temperature of $57\pm2°C$, the reaction was completed and the resulting conversion was higher than 96%.

The measurement of the conversion was carried out by the gas-chromatographic determination of the residual monomers in the polymeric solution.

A non-aromatic oil TDAE was added using a mixer on line, in an amount of $27.5 \pm 1.5°C$ together with a mix of antioxidants consisting of Irganox® 565 and Irgafos® 168 in such an amount that their content in the rubber was equal to 0.1 and 0.4%, respectively.

The polymer was separated from the solvent by stripping under a vapour flow and was subsequently mechanically dried by means of an extruder. The measurement of the molecular weight distribution, carried out by elution chromatography on gel (GPC) gave a value of the number average molecular weight $M_n$ equal to 248,000 and a dispersion index value ($M_w/M_n$) equal to 2.2. The GPC-MALLS analysis gave an alpha value equal to 0.58 typical of a linear polymer. The IR analysis gave a content of 1,2 units of 65.9%.

The oxidative demolition of the polymer followed by HPLC analysis showed the absence of styrene blocks; the glass transition temperature (Tg) measured by means of differential thermal analysis (DSC) gave a value of -20.1°C.

The Mooney viscosity effected on the oil-extended polymer [ML (1+4)at 100°C], gave a value of 51.

**Examples 22-23-24 (LC2, LC3, LC4)** - Preparation in continuous of styrene-butadiene copolymers in the presence of THFA-ethyl, THFA-isopropyl and THFA-t-butyl.

Three statistical styrene-butadiene copolymers were prepared, using the identical method described in example 21, using THFA-ethyl (example 22, polymer LC2), THFA-i-propyl (comparative example 23, polymer LC3) and THFA-t-butyl (comparative example 24, polymer LC4), instead of THFA-methyl, in such a quantity as to maintain the molar ratio between ether and lithium n-butyl constant, fed in an amount of $0.028 \pm 0.003$ phm.

Table 2 shows the results together with those of the previous example 21 (polymer LC1).

TABLE 2

| Polym | T °C | THFA-R/Li | $M_w$ ($10^{-3}$) | $M_w/M_n$ | Styrene % | 1,2% | $\alpha$ | $S_n$% | Tot. conv. | Tg °C | $M_L$ |
|---|---|---|---|---|---|---|---|---|---|---|---|
| LC1 | $57 \pm 2$ | 5.3-5.7 | 548 | 2.2 | 25.2 | 65.9 | 0.58 | 0 | 96.8 | -20.1 | 51 |
| LC2 | $57 \pm 2$ | 5.3-5.7 | 512 | 2 | 24.8 | 66.2 | 0.58 | 0 | 97.6 | -19.8 | 54 |
| LC3 | $57 \pm 2$ | 5.3-5.7 | 521 | 2 | 24.4 | 65.7 | 0.58 | 2 | 97.4 | -21.2 | 52 |
| LC4 | $57 \pm 2$ | 5.3-5.7 | 472 | 1.9 | 25.7 | 65.4 | 0.58 | 5 | 97.3 | -22.8 | 55 |

Table 2 clearly shows that, at the process temperature of 57°C, only the copolymers LC1, prepared with THFA-methyl and LC2, prepared with THFA-ethyl according to the invention, have a complete absence of styrene sequences, due to the optimal randomising capacity of the ethers. The values of the total conversion and dispersion index $M_w/M_n$ of the distribution of the molecular weights, however, show that already at this temperature, the de-activation of the active terminals on the part of THFA-methyl is higher than that of the higher homologous products.

**Examples 25-26-27-28 (LC5, LC6, LC7, LC8)** - Preparation in continuous of styrene-butadiene copolymers having about 40% of styrene and about 40% of vinyl.

Comparative example 25 (LC5) was carried out in the presence of THFA-methyl, example 26 of the present invention (LC6) in the presence of THFA-ethyl, comparative example 27 (LC7) in the presence of THFA isopropyl and comparative example 28 (LC8) in the presence of THFA-t-butyl.

Copolymerizations of butadiene and styrene are carried out under synthesis conditions analogous to those of examples 21-22-23-24, by feeding the reagent mix containing 7.2% by weight of butadiene and 4.8% by weight of styrene, regulating the temperatures so as to maintain the temperature in the first reactor between 90 and 94°C. A quantity of lithium n-butyl of 0.028 $\pm$ 0.003 phr and THFA-R in such an amount as to maintain the THFA-R/Li ratio within the range of 6.2-6.5, was fed together with the blend of monomers. Polymers were obtained under these conditions, whose analysis provided the data shown in table 3.

TABLE 3

| Polym | T °C | THFA-R/Li | $M_w$ $(10^{-3})$ | $M_w/M_n$ | Styrene % | 1,2% | $\alpha$ | $S_n$% | Tot. conv. | Tg °C | $M_L$ |
|---|---|---|---|---|---|---|---|---|---|---|---|
| LC5 | 92 ± 2 | 6.2-6.5 | 674 | 2.7 | 39.5 | 40.3 | 0.58 | 0 | 93.4 | -21.2 | 53 |
| LC6 | 92 ± 2 | 6.2-6.5 | 587 | 2.3 | 41.3 | 39.9 | 0.56 | 0 | 98.3 | -20.5 | 55 |
| LC7 | 92 ± 2 | 6.2-6.5 | 543 | 2.2 | 40.6 | 39.8 | 0.56 | 7 | 97.9 | -22.2 | 57 |
| LC8 | 92 ± 2 | 6.2-6.5 | 511 | 2.0 | 39.7 | 39.7 | 0.53 | 10 | 98.7 | -23.3 | 55 |

As can be seen from the data of table 3, the increase in temperature creates the necessity of increasing the THFA-R/Li ratio to the values indicated, in order to keep the content of 1,2 units relatively high. When THFA-methyl is used, a lower conversion is observed together with a significant increase in the dispersion index of the molecular weight distribution $M_w/M_n$ both caused by the increase in the termination rate of the active terminals of the macromolecule with the ether. The value of the $\alpha$ coefficient shows the appearance of the presence of a more marked branching in the polymers synthesized with THFA-butyl, lower in the case of the use of THFA-isopropyl and ethyl, absent when THFA-methyl is used. Analysis of the styrene sequences shows the improved distribution of the vinyl aromatic monomer in the samples synthesized with THFA-methyl and THFA-ethyl (polymers LC5 and LC6)

**Examples 29-30-31-32 (LC9, LC10, LC11, LC12)** - Preparation in continuous of styrene-butadiene copolymers having about 25% by weight of styrene.

Comparative example 29 (polymer LC9) was carried out in the presence of THFA-methyl, example 30 of the present invention (polymer LC10) in the presence of THFA-ethyl, comparative example 31 (LC11) in the presence of THFA-i-propyl and comparative example 32 (LC12) in the presence of THFA-i-butyl.

Butadiene and styrene copolymerizations are effected under analogous synthesis conditions to those specified for examples 21-22-23-24, by feeding the solution, in hexane, of monomers containing 9% by weight of butadiene and 3% by weight of styrene, regulating the temperatures so as to maintain the temperature in the first reactor between 93 $\pm$3°C. A quantity of lithium n-butyl equal to 0.026 $\pm$ 0.003 phr and THFA-R in such an amount as to maintain the THFA-R/Li ratio within the range of 2.3-2.7, was fed together with the blend of monomers. Polymers were obtained under these conditions, whose analysis provided the data indicated in table 4.

TABLE 4

| Polym | T °C | THFA-R/Li | $M_w$ $(10^{-3})$ | $M_w/M_n$ | Styrene % | 1,2% | $\alpha$ | $S_n$% | Tot. conv. | Tg °C | $M_L$ |
|---|---|---|---|---|---|---|---|---|---|---|---|
| LC9 | 93 ± 3 | 2.3-2.7 | 671 | 2.7 | 26.2 | 23.2 | 0.58 | 0 | 94.3 | -50.8 | 53 |
| LC10 | 93 ± 3 | 2.3-2.7 | 554 | 2.2 | 25.7 | 24.8 | 0.55 | 0 | 98.9 | -50.2 | 56 |
| LC11 | 93 ± 3 | 2.3-2.7 | 532 | 2.2 | 26.0 | 23.8 | 0.55 | 7 | 98.7 | -51.9 | 57 |
| LC12 | 93 ± 3 | 2.3-2.7 | 502 | 2 | 27.1 | 23.1 | 0.52 | 10 | 99.7 | -52.5 | 52 |

As can be seen from the data indicated in table 4, the increase in temperature, also in this case, causes a broadening of the molecular weight distribution when THFA-methyl is used. The interactions with the growing terminal are extremely limited when ethyl, i-propyl and t-butyl derivatives of THFA are used. The lower value of the $\alpha$ coefficient of samples LC10-LC11 and LC12 is in accordance with the tendency for the active terminals to be involved with high temperature active branching reactions and consequently with visible effects if the termination reaction is of lesser importance. The improved distribution of the vinyl aromatic monomer for samples LC9 and LC10 should be noted.

EVALUATION OF RAW AND VULCANIZED POLYMERS

Technical blends were prepared using polymers LC1 to LC12, whose characteristics are indicated in tables 3, 4 and 5, adopting as inorganic base a functionalized silica (Coupsil 8113 GR) according to the following formulation:

- oil-extended polymer 137.5 phr
- Coupsil®8113 GR: 87.5 phr
- Santoflex®13: 1 phr
- Anox®HB: 1 phr
- Zinc oxide: 2.5 phr
- Stearic acid: 1 phr
- Rowax®721: 1.5 phr
- Diphenyl guanidine (DPG): 2 phr
- N-cyclohexyl-2-benzothiazyl Sulfeneamide(CBS): 1.7 phr
- Sulfur: 1.4 phr
- Polyplastol®19: 3 phr

The various ingredients were mixed in a Braebender mixer with a 350 cc chamber and rotors of the Banbury type at a starting temperature of 60°C and a discharge temperature (6 minutes of mixing cycle) of 150°C. The accelerating agent was then added in an open mixer followed by homogenization for a total of 6 minutes.
The vulcanization process was effected by moulding the test-samples for 40 minutes at 151°C.
The results of the characterizations effected on the raw and vulcanized blends are indicated in table 5 (properties of the raw blends) and table 6 (properties of the vulcanized blends). The following instruments were used for the above characterizations according to ASTM, ISO and internal methods:

- Determination of the Mooney and Δ Mooney viscosity

The determination of the Mooney viscosity of the blend was effected at 100°C with a rotor L and times (1+4) ; the variation in the Mooney viscosity (Δ Mooney) is defined as the difference in the Mooney viscosity of the blend and raw polymer.
Viscometer Monsanto MV2000E, ASTM D1646

- Determination of the swelling index,

Internal method, measurement of the diameter of an extruded product.

- Determination of the tensile properties (ultimate tensile strength, ultimate elongation, moduli):

   Instron 1121, ASTM 412

- Determination of the hardness:

Durometer Zwick, ASTM 2240

- Determination of the abrasion: DIN 53516
- Determination of the dynamic characteristics (tanδ) : Rheometrics RDS II; the measurement of the camping factor correlated to the rolling resistance (tanδ) is effected at 60°C, 5% deformation at a frequency of 1 Hz.
- Evaluation of the tackiness to the rolls of the open mixer: this is effected on the basis of a visible and comparative scale; a high value corresponds to a tendency towards a high tackiness.

TABLE 5

| Sample | Tackiness | Mooney blend | Δ Mooney | Swelling % |
|---|---|---|---|---|
| LC1 comparative | 7/10 | 114 | 61 | 35 |

(continued)

| Sample | Tackiness | Mooney blend | $\Delta$ Mooney | Swelling % |
|---|---|---|---|---|
| **LC2 invention** | 6/10 | 113 | 59 | 33 |
| LC3 comparative | 6/10 | 112 | 60 | 33 |
| LC4 comparative | 5/10 | 114 | 59 | 34 |
| LC5 comparative | 8/10 | 113 | 60 | 34 |
| **LC6 invention** | 6/10 | 110 | 55 | 36 |
| LC7 comparative | 6/10 | 113 | 66 | 36 |
| LC8 comparative | 5/10 | 108 | 53 | 41 |
| LC9 comparative | 8/10 | 114 | 61 | 36 |
| **LC10 invention** | 6/10 | 110 | 54 | 36 |
| LC11 comparative | 6/10 | 112 | 55 | 37 |
| LC12 comparative | 5/10 | 105 | 53 | 43 |

TABLE 6

| Sample | Hardness | 200% Module | Ultimate tensile strength MPa | Ultimate elongation % | Abrasion mm$^3$ | tan $\delta$ |
|---|---|---|---|---|---|---|
| LC1 comp | 72 | 5.5 | 18.2 | 451 | 149 | 0.190 |
| **LC2 inv.** | 71 | 5.5 | 18.3 | 455 | 148 | 0.188 |
| LC3comp | 70 | 5.5 | 17.9 | 448 | 150 | 0.188 |
| LC4 comp | 71 | 5.5 | 18.1 | 453 | 155 | 0.188 |
| LC5 comp | 71 | 5.5 | 17.8 | 451 | 147 | 0.193 |
| **LC6 inv.** | 70 | 6.1 | 20.3 | 415 | 146 | 0.186 |
| LC7 comp | 72 | 6.1 | 21.2 | 420 | 161 | 0.196 |
| LC8 comp | 71 | 6.1 | 19.9 | 422 | 169 | 0.198 |
| LC9 comp | 70 | 5.5 | 17.8 | 456 | 148 | 0.160 |
| **LC10 inv.** | 71 | 6.1 | 20.4 | 414 | 146 | 0.153 |
| LC11 comp | 72 | 6.1 | 20.2 | 418 | 161 | 0.173 |
| LC12 comp | 71 | 6.1 | 20.6 | 418 | 172 | 0.175 |

**Comments to tables 5 and 6**

An analysis of the data of tables 5 and 6 shows the importance of a good distribution of styrene in the polymeric chain. The presence of blocks or non-random sequences of the vinyl aromatic monomer causes a higher hysteresis of the vulcanised elastomer as shown by the higher tan $\delta$ values of samples LC7 and LC8 with respect to the corresponding LC5 and LC6 and of samples LC12 and LC13 with respect to the corresponding LC9 and LC10.

In the samples synthesized at 57°C, the substantially good distribution of the vinyl aromatic monomer shows practically the same tan $\delta$ values. The effect of the molecular weight distribution, described by the dispersion index $M_w/M_n$, indicates the importance of the band of the low molecular weight products in determining the characteristics of lower processability of the materials and higher tackiness to the rolls of the open mixer. Higher tackiness to the rolls is observed in samples LC1, LC5 and LC9, in which the higher termination rate of the active centres shown by THFA-methyl, caused a higher value of the dispersion index $M_w/M_n$. Furthermore, but only for syntheses at a higher temperature, residence at high temperature under conditions of a low monomer concentration, causes the appearance of a branching, in polymers synthesized with an ether which has a low or null termination rate, as shown in table 6 by the value of the coefficient $\alpha$ for the polymers LC6, LC7, LC8 and LC10, LC11 and LC12. The presence of a branching causes a better dispersion of the filler in these polymers with a consequent increase in the module values and ultimate tensile strength (with a consequent decrease in the ultimate elongation) if compared to linear polymers (LC1, LC2, LC3, LC4, LC5, LC9). The branching causes a moderate increase in the swelling with respect to linear polymers (LC6. LC7, LC8 and LC10, LC11, LC12 against LC2, LC3, LC4). As a result, for materials synthesized at a high temperature, the swelling of the branched products is analogous to that of the linear polymer (LC5 and LC9) as in the latter the higher quantity of high molecular weights has an unfavourable effect (the same Mooney viscosity but higher $M_w/M_n$ value) .

What is specified above demonstrates the importance of the use of ether (THFA-ethyl) of the present invention, as it does not interact with the growing chains (lower $M_w/M_n$ and formation of a branching which makes post-modification unnecessary), at the same time guaranteeing a random distribution of the vinyl aromatic monomer in the macromolecule.

**Claims**

1.  Process in continuous effected in the presence of at least two reactors in series, for the preparation of statistical vinyl arene/conjugated diene copolymers, the vinyl arene content ranging from 15 to 50% by weight, by means of the copolymerization under isothermal conditions in a hydrocarbon solvent, at a temperature ranging from 30 to 120°C, of vinyl arene/conjugated diene monomers, the above process being carried out in the presence of at least one initiator selected from organo-lithium derivatives and a modifier, **characterized in that** the modifier is 2-methoxy ethyl tetra-hydrofuran (THFA-ethyl).

2.  The process according to claim 1, wherein the reactors in series are of the CSTR type.

3.  The process according to claim 1, wherein the vinyl arene is styrene.

4.  The process according to claim 1, wherein the conjugated diene is 1,3-butadiene.

5.  The process according to claim 1, wherein the vinyl arene content ranges from 20 to 45% by weight.

6.  The process according to claim 1, wherein the temperature ranges from 50 to 110°C, preferably from 80 to 110°C.

7.  The process according to claim 1, wherein the organo-lithium derivatives are selected from lithium alkyls, the latter being present in quantities ranging from 1 to 20 mmoles, preferably from 4 to 10 mmoles per 1,000 g of the blend of monomers.

8.  The process according to claim 1, wherein the molar ratio between THFA-ethyl and the organo-lithium derivative ranges from 0.5 to 15, preferably from 2 to 10.

9.  The process according to claim 1, wherein the hydrocarbon solvent consists of one or more hydrocarbons selected from hydrocarbons of the aliphatic and cycloaliphatic series or mixtures thereof.

10. The process according to claim 1, wherein the statistical styrene/butadiene copolymer has a weight average molecular weight ($M_w$) of between 200,000 and 800,000 and a $M_w/M_n$ ratio of between 1.6 and 2.5.

11. The process according to claim 1, wherein the continuous process is carried out with a residence time ranging from 30 to 120 minutes.

12. The process according to claim 1, wherein the concentration of monomers in the reaction medium is from 5 to 20% by weight.

13. The process according to claim 1, wherein an oil extender, mainly aromatic, is added to the statistical styrene/ butadiene copolymer formed at the end of the process.

14. The process according to claim 1, wherein the statistical styrene/butadiene copolymer has a content of vinyl units lower than 30% with respect to the diene portion only.

15. The process according to claim 1, wherein the statistical styrene/butadiene copolymer has a content of vinyl units higher than 60% with respect to the diene portion only.

16. Statistical styrene/butadiene copolymers having a styrene content of 25:t3% and a content of vinyl units of $25\pm3\%$, prepared according to claim 1 at a temperature ranging from 90 to 95°C and a THFA-ethyl/lithium molar ratio from 2 to 3.

17. Statistical styrene/butadiene copolymers having a styrene content of $40\pm3\%$ and a content of vinyl units of $40\pm3\%$, prepared according to claim 1 at a temperature ranging from 90 to 95°C and a THFA-ethyl/lithium molar ratio ranging from 6.0 to 7.5.

**European Patent Office**

**EUROPEAN SEARCH REPORT**

Application Number

EP 07 00 3216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 576 376 A (SHIBATA ET AL) 19 November 1996 (1996-11-19) * column 6, line 42 - column 7, line 61 * * example 1; tables * ----- | 1-17 | INV. C08F236/10 C08F4/48 |
| Y | US 2002/120082 A1 (HSU WEN-LIANG ET AL) 29 August 2002 (2002-08-29) * abstract; claim 11; examples 22,23 * * paragraphs [0019] - [0021], [0024], [0026], [0035], [0039] * ----- | 1-17 | |
| Y | US 5 231 152 A (ROGGEMAN ET AL) 27 July 1993 (1993-07-27) * abstract; examples; table II * * column 9, line 60 - line 62 * * column 11, line 5 - line 6 * ----- | 1-17 | |
| A | US 5 231 153 A (HSU ET AL) 27 July 1993 (1993-07-27) * abstract; claims; examples 22-27 * * column 2, line 60 - line 66 * ----- | 1-17 | |

TECHNICAL FIELDS SEARCHED (IPC)

C08F

The present search report has been drawn up for all claims

| Place of search | Date of completion of the search | Examiner |
|---|---|---|
| The Hague | 18 June 2007 | Mettler, Rolf-Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 00 3216

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2007

| Patent document cited in search report | | Publication date | Patent family member(s) | | Publication date |
|---|---|---|---|---|---|
| US 5576376 | A | 19-11-1996 | DE | 69410669 D1 | 09-07-1998 |
| | | | DE | 69410669 T2 | 03-12-1998 |
| | | | EP | 0617060 A2 | 28-09-1994 |
| | | | JP | 6279620 A | 04-10-1994 |
| US 2002120082 | A1 | 29-08-2002 | NONE | | |
| US 5231152 | A | 27-07-1993 | CA | 2057847 A1 | 19-06-1992 |
| | | | DE | 69120041 D1 | 11-07-1996 |
| | | | DE | 69120041 T2 | 24-10-1996 |
| | | | EP | 0491199 A1 | 24-06-1992 |
| | | | ES | 2087215 T3 | 16-07-1996 |
| | | | JP | 3183695 B2 | 09-07-2001 |
| | | | JP | 4279614 A | 05-10-1992 |
| US 5231153 | A | 27-07-1993 | AU | 3672593 A | 14-10-1993 |
| | | | BE | 1006548 A3 | 11-10-1994 |
| | | | BR | 9301412 A | 13-10-1993 |
| | | | CA | 2076148 A1 | 07-10-1993 |
| | | | DE | 4311367 A1 | 07-10-1993 |
| | | | ES | 2070075 A1 | 16-05-1995 |
| | | | FR | 2689511 A1 | 08-10-1993 |
| | | | GB | 2265902 A | 13-10-1993 |
| | | | IT | 1261222 B | 09-05-1996 |
| | | | JP | 6041212 A | 15-02-1994 |
| | | | MX | 9301873 A1 | 01-10-1993 |
| | | | NL | 9300595 A | 01-11-1993 |
| | | | US | 5300599 A | 05-04-1994 |
| | | | US | 5336739 A | 09-08-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4429090 A
- US 4429091 A
- US 4367325 A

**Non-patent literature cited in the description**

- **I.M. KOLTHOFF et al.** *J. Polymer Science,* 1946, vol. 1, 429
- **VIOLA et al.** Sequence distribution of styrene-butadiene copolymers by ozonolysis, high performance liquid chromatographicand gas chromatographic-mass spectrometric techniques. *J. Chromatography A,* 1994, vol. 117
- **TOKITA N. ; PLISKIN.** *Rubber Chemistry and Technology,* 1973, vol. 46, 1173
- Application Note, n° 9. **WYATT TECHNOLOGY ; PAVEL KRATOCHVIL.** Classical Light Scattering from Polymer Solutions, Polymer Science Library. Elsevier Science Publishers, 1987, vol. 5